# EUROPEAN PATENT APPLICATION

(11) **EP 1 950 968 A1**
(43) Date of publication of application: **30.07.2008**
(21) Application number: 07001381.8
(22) Date of filing: 23.01.2007
(51) Int. Cl.: H04N 7/18

(54) **System and method for digital type wireless monitoring**

(71) Applicant: Choi, Won-Gue, Yeoungtonggu Suwon City, Gyeonggi-do 443-848 (KR); Cho, Jung-Kun, Geumcheon-gu Seoul 153-801 (KR)
(72) Inventor: Choi, Won-Gue, Yeoungtonggu Suwon City, Gyeonggi-do 443-848 (KR); Cho, Jung-Kun, Geumcheon-gu Seoul 153-801 (KR)
(74) Representative: Basfeld, Rainer

(57) **Abstract**

A digital type wireless monitoring system includes transmitters having cameras therewith; and a receiver displaying image signals on a screen, the image signals being captured with the cameras at the transmitters and received wirelessly while being installed within a specified distance from the transmitters. Each transmitter performs an MPEG-4 encoding, which compresses only the image signals while excluding audio signals; and creates a file by combining a header containing information of each transmitter and communication standard with each of the image signals for each frame. Further, the receiver having a permanent IP address receives the files received by an AP; receives the files containing header information via the AP; streaming replays images of many channels simultaneously or images of a single channel by using a streaming viewer; stores the image signals of each transmitter being streaming replayed to a designated storage space under the control of a supervisor.

## Description

### Field of the Invention

The present invention is directed to a wireless monitoring system and method thereof. More particularly, the present invention relates to a digital type wireless monitoring system and method thereof allowing a streaming replay without any file conversion and enabling data to be stored in a small data volume by encoding only image signals obtained from cameras and received from a plurality of transmitters having the cameras, which in turn significantly reduces the amount of transmitting data, when wirelessly monitoring a location required to be secured or closely watched by communicating the transmitters with a single receiver, thereby allowing the data to be transmitted via a number of channels and decoding the image signals thus received from each of the transmitters at the receiver with an AP (Access Point).

### Discussion of the Prior Art

In recent years, as the necessity to watch and prevent crime has greatly increased, monitoring systems employing surveillance cameras have been actively employed in buildings, department stores, discount stores, crime-ridden zones, etc.

As for a method to employ such surveillance cameras, a plurality of cameras are installed for a closed circuit and each image displayed in real time on monitors is watched, where the number of the monitors provided corresponds to the number of the cameras installed, or a single monitor is used to monitor a desired location, where several images captured by several surveillance cameras are displayed on the single monitor by using an image distributor or distributors. Techniques based on MPEG-4 or JPEG is implemented for such systems. However, such a closed circuit method has a drawback in that, since monitors are required to be connected by wire to each surveillance camera, it can only be used where the distance between the monitors and the cameras is relatively short. Further, its exterior appearance is not desired because of the connecting wires. It is difficult to maintain the wires as well.

In order to solve such disadvantages, an alternate method, which is to display images received on the monitors by transmitting wirelessly from each surveillance camera, has been employed in recent years. The technique implements an analog transmitting technology to the wireless surveillance cameras. Although such a wireless system has an advantage in that the surveillance cameras can be installed at locations situated farter away than that of the conventional closed circuit one, it still has a distance constrain in that it is required to be used within a 2 to 3 Km range.

Further, since the wireless system transmits both sound and image signals when transmitting from each surveillance camera to the monitors, the transmitting data is significantly large, thereby considerably limiting the transmitting speed and the number of usable channels and requiring a lot of storage space for the transmitted data when storing. Therefore, it contains a problem in that a storage equipment having a large capacity such as DVR and the like is needed in addition to the surveillance equipment.

Meanwhile, common replaying programs can be employed instead of dedicated streaming viewers when displaying images captured by the conventional surveillance cameras on monitors. However, since most of the replaying programs are not streaming playing types and thus transmitted files are converted and replayed, speed thereof is slow. Further, even if stored files are replayed, the conversion of the files is still required, which in turn gives a burden to a CPU and reduces its opening speed.

### Summary of the Invention

In order to solve the aforementioned problems, there is provided one aspect of the present invention, which is to provide a digital type wireless monitoring system and method thereof allowing wireless monitoring of a location required to be secured or closely watched by communicating a plurality of transmitters having cameras with a single receiver.

Another aspect of the present invention is to provide a digital type wireless monitoring system and method thereof, which allows data transmission via a number of channels by encoding only image signals captured by cameras from transmitters while excluding audio signals, since the transmitting data can be significantly reduced.

Still another aspect of the present invention is to provide a digital type wireless monitoring system allowing streaming replaying in real time without any conversion and enabling data to be stored in a small data volume by decoding image signals received from each of the transmitters at the receiver with an AP, which is enabled by providing a streaming viewer for streaming replaying of each image signal received via each channel and a convenient storage; and a decoder player for replaying stored files to the receiver.

Still another aspect of the present invention is to provide a digital type wireless monitoring system and method thereof by assigning a permanent IP address to each transmitter and each receiver, which prevents a mutual interference and a crosstalk.

Other aspects and advantages of the present invention will be more apparent with accompanying drawings and the following detailed description of the present invention.

In accordance with an embodiment of the present invention, there is provided a digital type wireless monitoring system including: transmitters having cameras therewith; and a receiver displaying image signals on a screen, the image signals being captured with the cameras at the transmitters and received wirelessly while being installed within a specified distance from the transmitters, wherein each transmitter performs an MPEG-4 encoding, for each frame, of the image signals captured by the cameras by using an MPEG-4 codec; performs again the MPEG-4 encoding of each of the MPEG-4 encoded image signals by each frame with an encoder, which compresses only the image signals while excluding audio signals; and creates a file by combining a header containing information of each transmitter and communication standard with each of the image signals for each frame, the image signals being encoded twice as discussed above; an AP (Access Point) receives files containing a header information simultaneously from the transmitters by each frame via different channels; and the receiver having a permanent IP address receives the files received by the AP by using a time division method via the AP; receives files containing header information by each frame captured from a plurality of the transmitters via the AP; after decoding respective files by specifying each transmitter based on the information contained in the header of each of the file received by frame, streaming replays images of many channels simultaneously or images of a single channel by using a streaming viewer; stores the image signals of each transmitter being streaming replayed to a designated storage space under the control of a supervisor.

Each of the transmitters may include a video driver, a video driver controller, a camera, a camera driver, a controller, an encoder, and a wireless communication unit; the video driver requests each image signal by frame captured from the camera to the camera driver once each image signal by frame captured from the camera is requested by the video driver controller, and outputs each image signal by frame inputted from the camera driver to the video driver controller; the video driver controller requests each image signal by frame captured from the camera to the video driver once each image signal by frame captured from the camera is requested by the controller, and outputs to the controller image signals by frame inputted from the video driver after encoding the image signal into MPEG-4 by using an MPEG-4 encoder; the camera outputs images of a monitoring target captured therewith under the control of the camera driver; the camera driver outputs each image signal by frame captured form the camera to the video driver once each image signal by frame captured by the camera is requested by the video driver; the controller requests each image signal by frame captured from the camera to the video driver controller; controls a two-stage encoding process which compresses only image signal while excluding audio signals once the image signal by frame encoded in MPEG-4 is inputted from the video driver controller; creates a file by combining each image signal by frame encoded twice with the encoder with a header containing information of respective transmitter and information of communication standard; and transmits the respective file after performing an encryption via a wireless communication network to the AP 200; the encoder performs the two-stage encoding to compress only image signals while excluding audio signals, the image signals being processed by each frame by an MPEG-4 encoding at the video driver controller under the control of the controller, and outputs each double encoded image signal by frame to the controller; and the wireless communication unit transmits files containing header information formed with each frame under the control of the controller to the AP via a wireless network by using different channels.

The transmitters may include a wireless communication unit, a streaming driver, a decoder, a display unit, a storage driver, and a data storage unit; the wireless communication unit receives files from each of a plurality of the transmitters transmitted by frame according to a time division method from the AP; and outputs each file by frame to the streaming driver by specifying each transmitter based on header information included in each file by frame after confirming an encryption of each file by frame received from the AP; the streaming driver controls decoding of each file by frame inputted according to each transmitter from the wireless communication unit; and controls streaming replaying of each decoded signal by frame of different channels simultaneously, or controls streaming replaying on a screen from a single channel with a streaming viewer; the decoder decodes each file by frame transmitted from each transmitter based on a request of the streaming driver, and outputs each decoded image signal by frame of different channels to a streaming driver; the display unit streaming replays each image signal by frame of different channels inputted from the streaming driver through a streaming viewer; the storage driver controls storing of respective image signals, where the image signals are being streaming replayed via the display unit once a supervisor, who monitors the image signals specified by each transmitter with a streaming viewer, selects to store specific channel image signals; and the data storage unit stores image signals of a specific channel, the image signals being streaming replayed via the display unit under the control of the storage driver.

The receiver may be any one of a server computer, a laptop PC, and a desktop PC.

The receiver further may include a codec player dedicated for replaying data stored by each channel and is capable of replaying image signals of a specific channel stored in advance by decoding via the decoder respective data which has been stored in advance at the data storage unit after operating the codec player according to a command given by the supervisor to replay the images.

The receiver, in case of using a file converter, may be capable of replaying each file by frame by using an ordinary replaying program transmitted from a plurality of the transmitters via the AP after converting the file into an ordinary file.

The AP may use other wireless communication equipments other than a communication equipment having the receiver, if any wireless internet connection is connected to the AP.

In accordance with another embodiment of the present invention, there is provided a digital type wireless monitoring method for performing a monitoring by displaying on a screen image signals captured from cameras, which are wirelessly transmitted from transmitters installed within a specific distance from the transmitters to a receiver, wherein the method includes the steps of: (1) performing an MPEG-4 encoding, for each frame, of the image signals captured by the cameras from a plurality of the transmitters by using an MPEG-4 codec; performing again the MPEG-4 encoding of each of thus encoded MPEG-4 image signals by frame with an encoder, which compresses only the image signals while excluding audio signals; creating files by combining a header having information of each transmitter and communication standard with each of the image signals for each frame, where the image signals are encoded twice; and transmitting the files containing header information formed with each frame by using different channels to an AP; (2) receiving the files containing the header information of each frame which are simultaneously transmitted via different channels for each frame from a plurality of the transmitters; and transmitting respective files received from the transmitters to the receiver having a permanent IP address by using a time division method; and (3) receiving the files containing header information by frame captured from a plurality of the transmitters via the AP; after decoding respective files by specifying each transmitter based on the information contained in the header of each of the files by frame received, streaming replaying images of different channels simultaneously or images of a single channel by using a streaming viewer; and storing the image signals of each transmitter being streaming replayed to a designated storage space under the control of a supervisor.

The digital type wireless monitoring method may further include the step of (4) operating a codec player dedicated for replaying data stored by each frame in the receiver according to a key input given by the supervisor to replay image signals of a specific channel stored in advance; and replaying the respective data of the channel stored in advance via the dedicated codec player by decoding the data thereof.

The performing step (1) may include: (1-1) requesting a frame of a camera captured image signal to the video driver controller with the controller of each transmitter; (1-2) requesting a frame to the video driver with the video driver controller that has received the requested frame from the controller; (1-3) providing the video driver that has received the request of one frame from the video driver controller with a respective frame by requesting a frame to the camera driver via a camera API (application programming interface); (1-4) outputting a frame inputted from the camera driver to the video driver controller with the video driver; (1-5) outputting, after encoding the frame received from the video driver by using a MPEG-4 codec, the encoded respective frame to the controller with the video driver controller; (1-6) requesting an encoding of the encoded MPEG-4 frame via the video driver controller, after outputting only an image signal portion of the frame by using the encoder that only compresses image signals while excluding audio signals, with the controller; (1-7) outputting respective double encoded frame via a codec to the controller with the encoder; (1-8) creating a file by combining the double encoded frame through the encoder with a header containing transmitter information and information on communication standard with the controller; and (1-9) transmitting the file having the header combined therewith to the AP via the wireless communication unit after encrypting the header.

The receiving step (3) may include: (3-1) confirming encryption of each received file with the wireless communication unit of the receiver that has received each file by frame captured at a plurality of the transmitters from the AP; (3-2) specifying, at the wireless communication unit that has confirmed the encryption, each transmitter based on information contained in a header of each file by frame received from the AP; (3-3) outputting each file by frame specified by each respective transmitter to the streaming driver with the wireless communication unit that has specified the transmitters that has transmitted each file by frame based on the information contained in the header; (3-4) requesting decoding of each file by frame after outputting the file by using the decoder, the file being inputted from the wireless communication unit, with the streaming driver; (3-5) decoding respective file received from each transmitter according to the request by the streaming driver with the decoder, and outputting the decoded frame to the streaming driver with the decoder; (3-6) outputting the decoded respective frame to the display unit via the decoder and controlling streaming replaying of each screen of each channel with a streaming viewer simultaneously, or controlling streaming replaying of a screen from a single channel with a streaming viewer with the streaming driver; (3-7) determining whether a storing of an image signal from a specific channel is selected by a supervisor monitoring each image signal by frame, the images being streaming replayed through a streaming viewer; and (3-8) storing the specific image signals selected by the supervisor to the data storage unit, once storing regarding image signal from a specific channel is selected from the supervisor, with the storage driver.

### Detailed Description of the Drawings

Fig. 1 is a block diagram schematically showing a construction of a digital type wireless monitoring system in accordance with the present invention.

Fig. 2 is a block diagram showing in detail a construction of a transmitter shown in Fig. 1.

Fig. 3 is a block diagram showing in detail a construction of a receiver shown in Fig. 1.

Fig. 4 is a flow diagram showing in detail an operation process of a digital type wireless monitoring method in accordance with the present invention.

Figs. 5 and 6 are flow diagrams showing in more detail operation processes of each subroutine of Fig. 4.

### Detailed Description of the Invention

A digital type wireless monitoring system for achieving such objects of the present invention in accordance with an embodiment of the present invention includes transmitters having cameras thereat; and a receiver displaying on screens image signals captured with the cameras from the transmitters and received wirelessly while being installed within a specified distance from the transmitters. More particularly, the digital type wireless monitoring system is characterized by including a plurality of the transmitters, an AP (Access Point), and a receiver. The transmitter performs an MPEG-4 encoding, for each frame, of the image signals captured by the cameras by using an MPEG-4 codec; performs again the MPEG-4 encoding of each of the MPEG-4 encoded image signals by each frame with an encoder, which compresses only the image signals while excluding audio signals; creates files by combining a header having information of each transmitter and communication standard with each of the image signals by frame, where the image signals are encoded twice as discussed above; and transmits the file containing header information formed with each frame by using different channels to an AP. Further, the AP receives the files containing the header information of each frame which are simultaneously transmitted via different channels for each frame from a plurality of the transmitters; and transmits respective files received from the transmitters to the receiver having a permanent IP address by using a time division method. Further, the receiver receives the files containing header information by frame captured from a plurality of the transmitters via the AP; after decoding respective files by specifying each transmitter based on the information contained in the header of each of the files received by frame, streaming replays images of many different channels simultaneously or images of a single channel by using a streaming viewer; and stores the image signal of each transmitter, which is streaming replayed, to a designated storage space under the control of a supervisor.

Moreover, the digital type wireless monitoring method in accordance with the embodiment of the present invention is configured to perform a monitoring by displaying on screens image signals captured from cameras, which are wirelessly transmitted from transmitters installed within a specific distance from the transmitters to the receiver. More specifically, the digital type wireless monitoring method is characterized by including the steps of: (1) performing an MPEG-4 encoding, for each frame, of the image signals captured by the cameras from a plurality of the transmitters by using an MPEG-4 codec; performing again the MPEG-4 encoding of each of the MPEG-4 encoded image signals by frame with an encoder, which compresses only the image signals while excluding audio signals; creating files by combining a header having information of each transmitter and communication standard with each of the image signals by frame, where the image signals are encoded twice as discussed above; and transmitting the files containing header information formed with each frame by using different channels to an AP; (2) receiving the files containing the header information of each frame which is simultaneously transmitted via a different channel for each frame from a plurality of the transmitters; and transmitting respective files received from the transmitters to the receiver having a permanent IP address by using a time division method; and (3) receiving files containing header information by frame captured from a plurality of the transmitters via the AP; after decoding respective files by specifying each transmitter based on the information contained in the header of each of the files by frame received, streaming replaying images of many channels simultaneously or images of a single channel by using a streaming viewer; and storing the image signals of each transmitter, which is streaming replayed, to a designated storage space under the control of a supervisor.

Hereinafter, there will be described the digital type wireless monitoring system and method thereof in accordance with the present invention in detail with reference to the accompanying drawings.

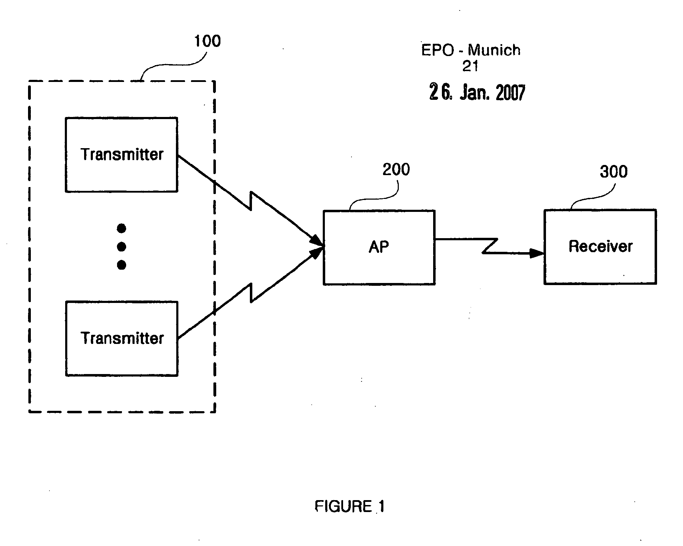

Fig. 1 is a block diagram schematically showing a construction of the digital type wireless monitoring system in accordance with the present invention.

Here, in accordance with an embodiment of the present invention, the IEEE802.11b wireless LAN standard having a maximum transferring speed of 11 Mbps is employed for a communication network; a 2.4 GHz WiFi is employed for communications between each transmitter 100 and an AP (Access Point) 200 and between the AP 200 and a receiver 300; and the AES (Advanced Encryption Standard) is used for an encryption standard between the AP 200 and the receiver 300. In addition, in the embodiment of the present invention, an example of nine transmitters 100 being connected to one receiver 300 is discussed.

A plurality of the transmitter 100 performs an MPEG-4 encoding, for each frame, of the image signals captured by the cameras by using an MPEG-4 codec; performs again the MPEG-4 encoding of each of the MPEG-4 encoded image signals by frame with an encoder, which compresses only the image signals while excluding audio signals (Hereinafter, since the embodiment of the present invention uses only the image signals by compressing them based on the MPEG-4 standard technique, file formats for files being encoded twice will be defined as *.m4v); creates a file by combining a header having information with respect to each transmitter 100 and communication standard with each of the image signals for each frame, where the image signals are encoded twice as discussed above; and transmits the file containing header information formed with each frame by using a different channel to the AP 200.

Here, the size of data being transmitted from the transmitters 100 to the AP 200 for each frame is about 4 Kbyte, and the size of the data is about 60 Kbyte when transmitting 15 frames per second and about 12 Kbyte when transmitting 30 frames per second. In this regard, since the communicating speed between each of the transmitters 100 and the AP 200 is 11 Mbps, there lies no problem as discussed below.

When using a wireless network between the AP 200 and the receiver 300, since the communication speed is 11 Mbps, it is possible to employ data worth about up to 91 transmitters. However, when operating at a minimum speed of 1 Mbps, since the distance between the transmitters 100 and the receiver 300 is increased, it is possible to transmit data only worth about 8 transmitters.

Further, when employing a wire network between the AP 200 and the receiver 300, since the speed is at maximum 10 Mbps, it is possible to transmit data worth up to 83 transmitters. Therefore, such an encoding method is able to obtain an improved efficiency of 50 to 300% when transmitting data compared to other general encoding methods.

The AP 200 receives the files containing the header information of each frame, which is simultaneously transmitted via a different channel for each frame from a plurality of the transmitters 100; and transmits respective files received from the transmitters 100 to the receiver 300 having a permanent IP address by using a time division method.

Here, if any wireless internet connection is connected to the AP 200, other wireless communication equipments may be connected for use instead of a communication equipment having the receiver 300.

The receiver 300, which includes a permanent IP address assigned only to itself, receives files containing header information by frame captured from a plurality of the transmitters 100 via the AP; and, after decoding respective files by specifying each transmitter based on the information (IP address) contained in the header of each of the files received by frame, streaming replays images of many channels simultaneously or images of a single channel by using a streaming viewer. That is, since the streaming viewer is configured to view screens of nine transmitters with a single screen by setting IP addresses thereto, it is not only possible to monitor the image signals from all the channels transmitted from each transmitter 100 through a single screen, but also possible to monitor image signals corresponding to each transmitter if desired by a supervisor.

Further, the receiver 300 stores image signals being used for streaming replaying for each transmitter 100 to a designated space according to a storing command given by the supervisor. In this manner, it is possible to minimize a hard disk space when storing the image signals transmitted from the transmitters 100, the hard disk being provided at the receiver 300. For example, when one transmitter 100 transmits 15 frames per second, a capacity of 5,184 Mbyte is needed to store one day worth of data since 60 Kbyte is stored for 86,400 seconds. If nine transmitters are used and their data is saved, a capacity of 45 Gbyte is used up in a day. In this manner, it is possible to significantly save data storage space compared to the conventional monitoring system. Here, the format of the files stored is as follows: "IP address" + "year month day hour minute second".m4v. The resolution is set at 320 x 240 QVGA.

Although the receiver 300 may be any one of a server computer, a laptop PC, and a desktop PC, it is not limited thereto, and all of the conventional communication equipments being presently used can be alternatively employed.

Moreover, the receiver 300 further includes a codec player dedicated for replaying data stored by each channel and is capable of replaying image signals of a specific channel stored in advance by decoding respective data which has been stored in advance after initiating the codec player according to a command given by the supervisor to replay images.

Further, when using a file converter, the receiver 300 is capable of replaying each file by frame by using an ordinary replaying program, which is transmitted from a plurality of the transmitters 100 via the AP 200 after converting the file into an ordinary format file.

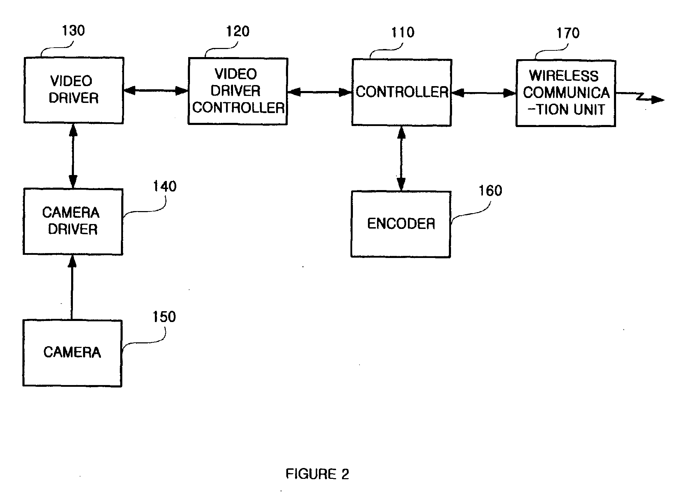

Fig. 2 is a block diagram showing in detail a construction of the transmitter 100 shown in Fig. 1.

As illustrated in the drawing, a controller 110 requests each image signal by frame captured from a camera 150 to a video driver controller 120; controls a two-stage encoding process which compresses only image signals while excluding audio signals via an encoder 160 once the image signal by frame encoded in MPEG-4 is inputted from the video driver controller 120; creates a file by combining each image signal by frame encoded twice with the encoder 160 with a header containing information of respective transmitter and information of communication standard; and transmits respective file, after performing an AES encryption via a wireless communication network, to the AP 200.

The video driver controller 120 requests each image signal by frame captured from the camera 150 to a video driver 130 once each image signal by frame captured from the camera 150 is requested by the controller 110, and outputs to the controller 110 image signals by frame inputted from the video driver 130 after encoding the image signal into MPEG-4 by using an MPEG-4 encoder.

The video driver 130 requests each image signal by frame captured from the camera 150 to a camera driver 140 once each image signal by frame captured from the camera 150 is requested by the video driver controller 120, and outputs each image signal by frame inputted from a camera driver 140 to the video driver controller 120.

The camera driver 140 outputs each image signal by frame captured form the camera 150 to the video driver 130 once each image signal by frame captured by the camera 150 is requested by the video driver 130.

The camera 150 outputs images of a monitoring target captured therewith under the control of the camera driver 140.

The encoder 160 performs the two-stage encoding to compress only image signals while excluding audio signals, where the image signals are processed by each frame by an MPEG-4 encoding at the video driver controller 120 under the control of the controller 110, and outputs each double encoded image signal by frame to the controller 110.

A wireless communication unit 170 transmits files containing header information formed with each frame under the control of the controller 110 to the AP 200 via a wireless network by using several different channels.

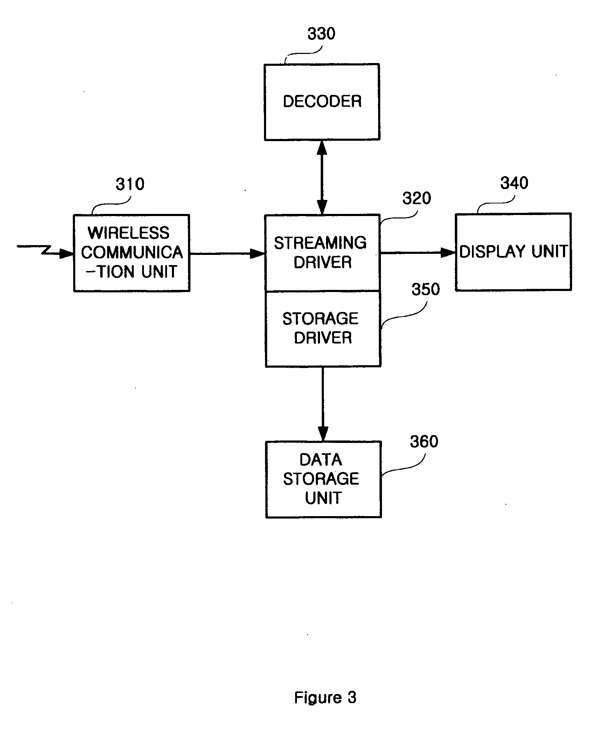

Fig. 3 is a block diagram showing in detail a construction of the receiver 300 shown in Fig. 1.

As illustrated in the figure, a wireless communication unit 310 receives each file of a plurality of the transmitters 100 transmitted by frame according to a time division method from the AP 200; and outputs each file by frame to a streaming driver 320 by specifying each transmitter 100 based on header information included in each file by frame after confirming the AES encryption of each file by frame received from the AP 200.

The streaming driver 320 controls decoding of each file by frame inputted according to each transmitter 100 from the wireless communication unit 310 via a decoder 330; and controls streaming replaying of each signal by frame of different channels, which is decoded via the decoder 330, simultaneously, or controls streaming replaying on a screen from a single channel with a streaming viewer.

The decoder 330 decodes each file by frame transmitted from each transmitter 100 based on a request of the streaming driver 320, and outputs each decoded image signal by frame of different channels to the streaming driver 320.

In general, units such as an LCD monitor or the like are employed as a display unit 340, and streaming replays each image signal by frame of different channels inputted from the streaming driver 320 through a streaming viewer.

A storage driver 350 controls storing of respective image signals to a data storage unit 360, where the image signals are being streaming replayed via the display unit 340 once a supervisor, who monitors the image signals specified by each transmitter 100 with a streaming viewer, selects to store specific channel image signals.

The data storage unit 360 stores image signals of a specific channel, the image signals being streaming replayed via the display unit 340 under the control of the storage driver 350.

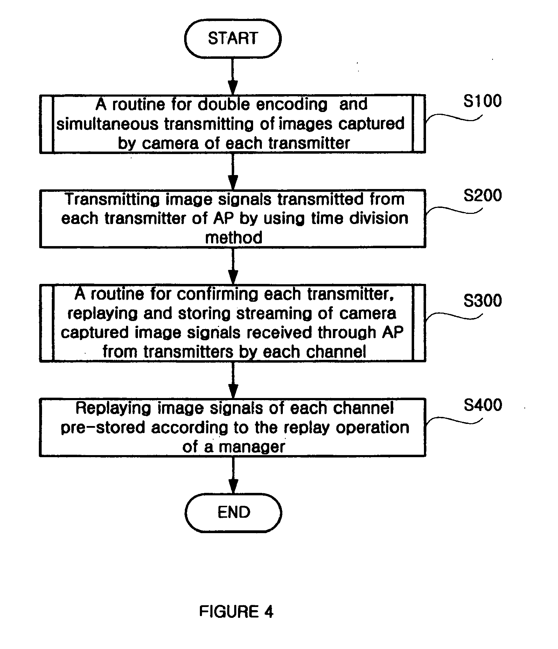

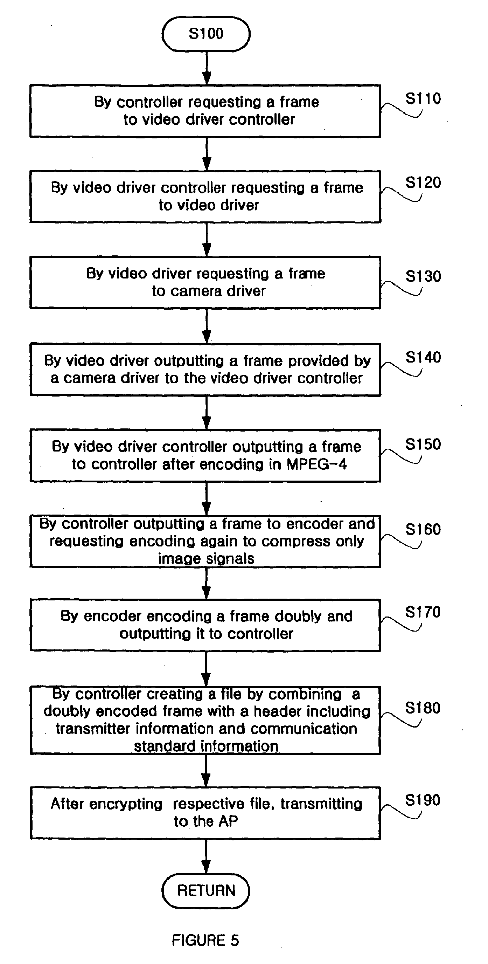

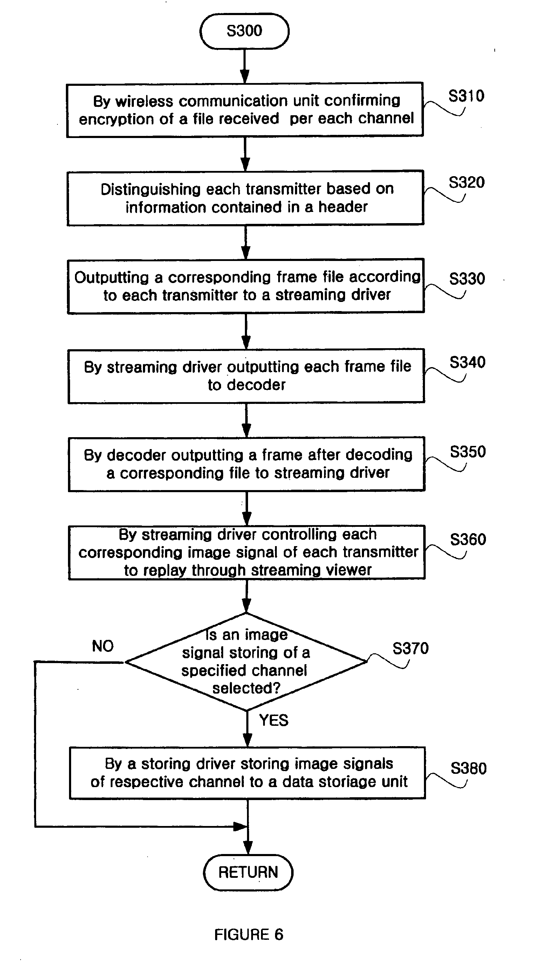

Next, an embodiment of a digital type wireless monitoring method in accordance with the above embodiment of the present invention will be discussed in detail with Figs. 4 to 6.

Figs. 4 to 6 are flow diagrams showing in detail an operation process of the digital type wireless monitoring method in accordance with the present invention.

First, after double encoding the images captured by the cameras 150 provided at a plurality of the transmitters 100s, they are transmitted to the AP 200 (S100). That is, a plurality of the transmitters 100 performs an MPEG-4 encoding, for each frame, of the image signals captured by the cameras 150 by using an MPEG-4 codec; performs again the MPEG-4 encoding of each of the MPEG-4 encoded image signals by each frame with an encoder, which compresses only the image signals while excluding audio signals; creates files by combining a header having information with respect to each transmitter 100 and communication standard with each of the image signals for each frame, where the image signals are encoded twice as discussed above; and transmits the file containing header information formed with each frame by using a different channel to an AP 200.

To discuss the above in detail, once the controller 110 of each transmitter 100 requests a frame of a camera captured image signal to the video driver controller 120 (S110), the video driver controller 120 that has received the above request of one frame from the controller 110 requests a frame to the video driver 130 (S120).

The video driver 130 that has received the request of one frame from the video driver controller 120 is provided with a respective frame by requesting a frame to the camera driver 140 via a camera API (application programming interface) (S130). The video driver 130 outputs a frame inputted from the camera driver 140 to the video driver controller 120 (S140), and the video driver controller 120 outputs, after encoding the frame received from the video driver 130 by using a MPEG-4 codec, the encoded respective frame to the controller 110 (S150).

The controller 110 requests an encoding of the MPEG-4 encoded frame via the video driver controller 120, after outputting only the image signal portion of the frame by using the encoder 160 that only compresses image signals while excluding audio signals (S160).

The encoder 160 outputs the double encoded frame via a codec to the controller 110 (S170).

The controller 110 creates a file by combining the double encoded frame through the encoder 160 with a header containing transmitter information and information on communication standard (S180), and transmits the file having the header combined therewith to the AP 200 via the wireless communication unit 170 after encrypting the header (S190).

By transmitting images captured by the cameras 150 from a plurality of the transmitters 100 to the AP 200 after double encoding the images as discussed in the step S100, the AP 200, which receives the file containing the header information of each frame which is simultaneously transmitted via a different channel for each frame from a plurality of the transmitters 100, transmits respective files received from the transmitters 100 to the receiver 300 having a permanent IP address by using a time division method (S200).

Next, the receiver 300 confirms each transmitter 100 based on a file containing header information by each captured frame from a plurality of the transmitters 100 transmitted via the AP 200, and performs streaming replaying or storing after decoding each respective file (S300). That is, the receiver 300 receives files containing header information by each frame captured from a plurality of the transmitters 100 and transmitted by the AP 200; and, after decoding respective files by specifying each transmitter 100 based on the information contained in the header of each of the file received by frame, streaming replays images of many channels simultaneously or images of a single channel by using a streaming viewer. In addition, image signals being streaming replayed is stored in designated storage spaces by each transmitter according to a storing operation given by a supervisor.

To further discuss the above in detail, the wireless communication unit 310 of the receiver 300 that has received each file by frame captured at a plurality of the transmitters 100 from the AP 200 confirms encryption of each received file (S310), and specifies each transmitter 100 based on information contained in a header of each file by frame received from the AP 200 (S320).

The wireless communication unit 310 that has specified the transmitters 100 that has transmitted each file by frame based on the information contained in the header outputs each file by frame specified by each respective transmitter 100 to the streaming driver 320 (S330).

The streaming driver 320 requests decoding of each file by frame after outputting the file by using the decoder 330, where the file is inputted from the wireless communication unit 310 (S340).

The decoder 330 decodes respective file received from each transmitter 100 according to the request by the streaming driver 320, and outputs the decoded frame to the streaming driver 320 (S350).

The streaming driver 320 outputs the decoded respective frame to the display unit 340 via the decoder 330 and controls streaming replaying of each screen of each channel with a streaming viewer simultaneously, or controls streaming replaying of a screen from a single channel with a streaming viewer (S360).

During the above step of performing the streaming replaying, the storage driver 350 determines whether a storing of an image signal from a specific channel is selected by a supervisor monitoring each image signal by frame, the images being streaming replayed through a streaming viewer (S370).

Once storing regarding image signal from a specific channel is selected from the selecting supervisor, the storage driver 350 stores the specific image signals selected by the supervisor to the data storage unit 360 (S380) .

To complete the operation, after the step S300 that streaming replays or stores camera captured image signals received from each transmitter 100 via the AP 200, the receiver 300 checks whether there has been a key input by the supervisor to replay a specific channel image signal that has been in advance stored at the data storage unit 360. Once there is selected a replaying for a specific stored file by the supervisor, a codec player dedicated to replay data stored by each channel is operated; the respective data that has been stored in advance in the data storage unit 360 is decoded by using the decoder 330; and the decoded data is replayed by a dedicated codec player (S400).

As discussed above, in accordance with the digital type wireless monitoring system and method thereof of the present invention, since only image signals captured by cameras while excluding audio signals are encoded from each transmitter and transmitted to a receiver via an AP, data size is significantly reduced. Therefore, when compared to a transmission according to a conventional analog method, image signals can be transmitted simultaneously while using a number of channels at a same speed as before. As a result, multiple channels can be used and the range of use can be expanded.

Further, by including a streaming viewer for streaming replaying and convenient storing of each transmitted signal from each channel and a decoder player for replaying stored files, each image signal transmitted from each channel can be simultaneously displayed or an image signal of a single channel can be displayed without any additional file conversion. Moreover, since the image signals received from the transmitters can be specified by each channel and stored in a low capacity, the storage space can be significantly reduced.

Further, the system can be installed at places that require surveillance and crime prevention such as buildings, department stores, discount stores, crime-ridden zones, etc. It also can be installed and removed easily at places requiring monitoring only temporarily (e.g., an examination hall, museums, and the like). Moreover, the difficulty of installation caused by wiring and disorganized appearance in the conventional system can be solved according to the present invention.

Further, since each of the transmitters and the receiver is assigned with a permanent IP address, a mutual interference and a crosstalk can be prevented, thereby providing a high quality wireless monitoring system.

While the invention has been shown and described with respect to the embodiments, it will be understood by those skilled in the art that various changes and modification may be made without departing from the scope of the invention as defined in the following claims.

## Claims

1. A digital type wireless monitoring system comprising:
transmitters having cameras therewith; and
a receiver displaying image signals on a screen, the image signals being captured with the cameras at the transmitters and received wirelessly while being installed within a specified distance from the transmitters,
wherein each transmitter performs an MPEG-4 encoding, for each frame, of the image signals captured by the cameras by using an MPEG-4 codec; performs again the MPEG-4 encoding of each of the MPEG-4 encoded image signals by each frame with an encoder, which compresses only the image signals while excluding audio signals; and creates a file by combining a header containing information of each transmitter and communication standard with each of the image signals for each frame, the image signals being encoded twice as discussed above;
an AP (Access Point) receives files containing a header information simultaneously from the transmitters by each frame via different channels; and
the receiver having a permanent IP address receives the files received by the AP by using a time division method via the AP; receives files containing header information by each frame captured from a plurality of the transmitters via the AP; after decoding respective files by specifying each transmitter based on the information contained in the header of each of the file received by frame, streaming replays images of many channels simultaneously or images of a single channel by using a streaming viewer; stores the image signals of each transmitter being streaming replayed to a designated storage space under the control of a supervisor.

2. The digital type wireless monitoring system of claim 1, wherein each of the transmitters include a video driver, a video driver controller, a camera, a camera driver, a controller, an encoder, and a wireless communication unit;
the video driver requests each image signal by frame captured from the camera to the camera driver once each image signal by frame captured from the camera is requested by the video driver controller, and outputs each image signal by frame inputted from the camera driver to the video driver controller;
the video driver controller requests each image signal by frame captured from the camera to the video driver once each image signal by frame captured from the camera is requested by the controller, and outputs to the controller image signals by frame inputted from the video driver after encoding the image signal into MPEG-4 by using an MPEG-4 encoder;
the camera outputs images of a monitoring target captured therewith under the control of the camera driver;
the camera driver outputs each image signal by frame captured form the camera to the video driver once each image signal by frame captured by the camera is requested by the video driver;
the controller requests each image signal by frame captured from the camera to the video driver controller; controls a two-stage encoding process which compresses only image signal while excluding audio signals once the image signal by frame encoded in MPEG-4 is inputted from the video driver controller; creates a file by combining each image signal by frame encoded twice with the encoder with a header containing information of respective transmitter and information of communication standard; and transmits the respective file after performing an encryption via a wireless communication network to the AP 200;
the encoder performs the two-stage encoding to compress only image signals while excluding audio signals, the image signals being processed by each frame by an MPEG-4 encoding at the video driver controller under the control of the controller, and outputs each double encoded image signal by frame to the controller; and
the wireless communication unit transmits files containing header information formed with each frame under the control of the controller to the AP via a wireless network by using different channels.

3. The digital type wireless monitoring system of claim 1 or 2, wherein the transmitters include a wireless communication unit, a streaming driver, a decoder, a display unit, a storage driver, and a data storage unit;
the wireless communication unit receives files from each of a plurality of the transmitters transmitted by frame according to a time division method from the AP; and outputs each file by frame to the streaming driver by specifying each transmitter based on header information included in each file by frame after confirming an encryption of each file by frame received from the AP;
the streaming driver controls decoding of each file by frame inputted according to each transmitter from the wireless communication unit; and controls streaming replaying of each decoded signal by frame of different channels simultaneously, or controls streaming replaying on a screen from a single channel with a streaming viewer;
the decoder decodes each file by frame transmitted from each transmitter based on a request of the streaming driver, and outputs each decoded image signal by frame of different channels to a streaming driver;
the display unit streaming replays each image signal by frame of different channels inputted from the streaming driver through a streaming viewer;
the storage driver controls storing of respective image signals, where the image signals are being streaming replayed via the display unit once a supervisor, who monitors the image signals specified by each transmitter with a streaming viewer, selects to store specific channel image signals; and
the data storage unit stores image signals of a specific channel, the image signals being streaming replayed via the display unit under the control of the storage driver.

4. The digital type wireless monitoring system of claim 3, the receiver is any one of a server computer, a laptop PC, and a desktop PC.

5. The digital type wireless monitoring system of claim 3, wherein the receiver further includes a codec player dedicated for replaying data stored by each channel and is capable of replaying image signals of a specific channel stored in advance by decoding via the decoder respective data which has been stored in advance at the data storage unit after operating the codec player according to a command given by the supervisor to replay the images.

6. The digital type wireless monitoring system of claim 3, wherein the receiver, in case of using a file converter, is capable of replaying each file by frame by using an ordinary replaying program transmitted from a plurality of the transmitters via the AP after converting the file into an ordinary file.

7. The digital type wireless monitoring system of claim 1, wherein the AP uses other wireless communication equipments other than a communication equipment having the receiver, if any wireless internet connection is connected to the AP.

8. A digital type wireless monitoring method for performing a monitoring by displaying on a screen image signals captured from cameras, which are wirelessly transmitted from transmitters installed within a specific distance from the transmitters to a receiver,
wherein the method comprises the steps of:
(1) performing an MPEG-4 encoding, for each frame, of the image signals captured by the cameras from a plurality of the transmitters by using an MPEG-4 codec; performing again the MPEG-4 encoding of each of thus encoded MPEG-4 image signals by frame with an encoder, which compresses only the image signals while excluding audio signals; creating files by combining a header having information of each transmitter and communication standard with each of the image signals for each frame, where the image signals are encoded twice; and transmitting the files containing header information formed with each frame by using different channels to an AP;
(2) receiving the files containing the header information of each frame which are simultaneously transmitted via different channels for each frame from a plurality of the transmitters; and transmitting respective files received from the transmitters to the receiver having a permanent IP address by using a time division method; and
(3) receiving the files containing header information by frame captured from a plurality of the transmitters via the AP; after decoding respective files by specifying each transmitter based on the information contained in the header of each of the files by frame received, streaming replaying images of different channels simultaneously or images of a single channel by using a streaming viewer; and storing the image signals of each transmitter being streaming replayed to a designated storage space under the control of a supervisor.

9. The digital type wireless monitoring method of claim 8, further comprising the step of (4) operating a codec player dedicated for replaying data stored by each frame in the receiver according to a key input given by the supervisor to replay image signals of a specific channel stored in advance; and replaying the respective data of the channel stored in advance via the dedicated codec player by decoding the data thereof.

10. The digital type wireless monitoring method of claim 8, the performing step (1) includes:
(1-1) requesting a frame of a camera captured image signal to the video driver controller with the controller of each transmitter;
(1-2) requesting a frame to the video driver with the video driver controller that has received the requested frame from the controller;
(1-3) providing the video driver that has received the request of one frame from the video driver controller with a respective frame by requesting a frame to the camera driver via a camera API (application programming interface);
(1-4) outputting a frame inputted from the camera driver to the video driver controller with the video driver;
(1-5) outputting, after encoding the frame received from the video driver by using a MPEG-4 codec, the encoded respective frame to the controller with the video driver controller;
(1-6) requesting an encoding of the encoded MPEG-4 frame via the video driver controller, after outputting only an image signal portion of the frame by using the encoder that only compresses image signals while excluding audio signals, with the controller;
(1-7) outputting respective double encoded frame via a codec to the controller with the encoder;
(1-8) creating a file by combining the double encoded frame through the encoder with a header containing transmitter information and information on communication standard with the controller; and
(1-9) transmitting the file having the header combined therewith to the AP via the wireless communication unit after encrypting the header.

11. The digital type wireless monitoring method of claim 8, the receiving step (3) includes:
(3-1) confirming encryption of each received file with the wireless communication unit of the receiver that has received each file by frame captured at a plurality of the transmitters from the AP;
(3-2) specifying, at the wireless communication unit that has confirmed the encryption, each transmitter based on information contained in a header of each file by frame received from the AP;
(3-3) outputting each file by frame specified by each respective transmitter to the streaming driver with the wireless communication unit that has specified the transmitters that has transmitted each file by frame based on the information contained in the header;
(3-4) requesting decoding of each file by frame after outputting the file by using the decoder, the file being inputted from the wireless communication unit, with the streaming driver;
(3-5) decoding respective file received from each transmitter according to the request by the streaming driver with the decoder, and outputting the decoded frame to the streaming driver with the decoder;
(3-6) outputting the decoded respective frame to the display unit via the decoder and controlling streaming replaying of each screen of each channel with a streaming viewer simultaneously, or controlling streaming replaying of a screen from a single channel with a streaming viewer with the streaming driver;
(3-7) determining whether a storing of an image signal from a specific channel is selected by a supervisor monitoring each image signal by frame, the images being streaming replayed through a streaming viewer; and
(3-8) storing the specific image signals selected by the supervisor to the data storage unit, once storing regarding image signal from a specific channel is selected from the supervisor, with the storage driver.
